Europäisches Patentamt

European Patent Office

Office européen des brevets

(11) Numéro de publication: **0 093 889**
**A1**

## (12) DEMANDE DE BREVET EUROPEEN

(21) Numéro de dépôt: 83103613.2

(22) Date de dépôt: 14.04.83

(51) Int. Cl.³: **E 06 B 7/23,** F 16 J 15/32, F 16 J 15/02

(30) Priorité: **19.04.82 FR 8206645**

(43) Date de publication de la demande: **16.11.83**
**Bulletin 83/46**

(84) Etats contractants désignés: **CH DE FR GB IT LI NL**

(71) Demandeur: **Société Anonyme dite LE JOINT FRANCAIS, 10, rue de la Baume, F-75008 Paris (FR)**

(72) Inventeur: **Fournier, Jean, 75, rue des Sablons, F-78400 Chatou (FR)**

(74) Mandataire: **Weinmiller, Jürgen et al, Zeppelinstrasse 63, D-8000 München 80 (DE)**

(54) **Joint d'étanchéité en élastomère.**

(57) Joint destiné à être disposé dans une gorge de section droite rectangulaire de l'une de deux surfaces rigides (1, 3) entre lesquelles on veut assurer l'étanchéité. Il comprend:

a) une enveloppe (4) de faces latérales et inférieure sensiblement parallèles à celles de la gorge, de surface supérieure (13) destinée à être appliquée contre l'autre surface rigide, et comportant dans sa partie inférieure une cavité longitudinale (8),

b) un jonc (9) disposé dans la cavité de l'enveloppe et venant en saillie sur la surface inférieure de celle-ci.

EP 0 093 889 A1

Joint d'étanchéité en élastomère

La présente invention concerne un joint en élastomère destiné à être disposé dans une gorge de section droite rectangulaire de l'une de deux surfaces rigides entre lesquelles on veut assurer l'étanchéité.

On a déjà proposé pour de telles étanchéités des joints gonflables. Cette solution est relativement coûteuse et compliquée, notamment du fait de la connexion avec un conduit de gonflage, surtout quand le pourtour le long duquel l'étanchéité doit être assurée est rectangulaire.

On pourrait envisager également de loger dans la gorge un profilé monobloc à jambes élastiques. Toutefois la profondeur admissible pour la gorge ne le permet pas dans la plupart des cas.

La présente invention a pour but de procurer un joint de fabrication simple et peu onéreuse, mais qui assure cependant une excellente étanchéité, notamment à l'eau ou à la pluie, entre des surfaces pouvant présenter un écartement variable et éventuellement important, et qui puisse être adapté à des pourtours d'étanchéité rectangulaires.

Le joint selon l'invention est caractérisé en ce qu'il comprend
a/ une enveloppe de faces latérales et inférieure sensiblement parallèles à celle de la gorge, de surface supérieure destinée à être appliquée contre l'autre surface rigide, et comportant dans sa partie inférieure une cavité longitudinale,
b/ un jonc disposé dans la cavité de l'enveloppe et venant en saillie sur la surface inférieure de celle-ci.

Il répond en outre de préférence à au moins l'une des caractéristiques suivantes :

- le jonc est creux et de section cylindrique,
- la section de la cavité de l'enveloppe est une ellipse tronquée pour permettre la déformation du jonc par écrasement,
- le jonc est collé au voisinage de sa génératrice supérieure sur la surface de la cavité de l'enveloppe,
- l'élastomère du jonc est plus souple que celui de l'enveloppe,
- lorsque le joint doit assurer l'étanchéité sur un pourtour rectangulaire, son enveloppe est monobloc, et son jonc se compose de 4 éléments droits à extrémités coupées à 90° ou 45°.

Il est décrit ci-après, à titre d'exemple et en référence aux figures du dessin annexé, un joint d'étanchéité composite selon l'invention.

La figure 1 représente un joint avant serrage des deux surfaces rigides.

La figure 2 représente ce joint après serrage des deux surfaces rigides.

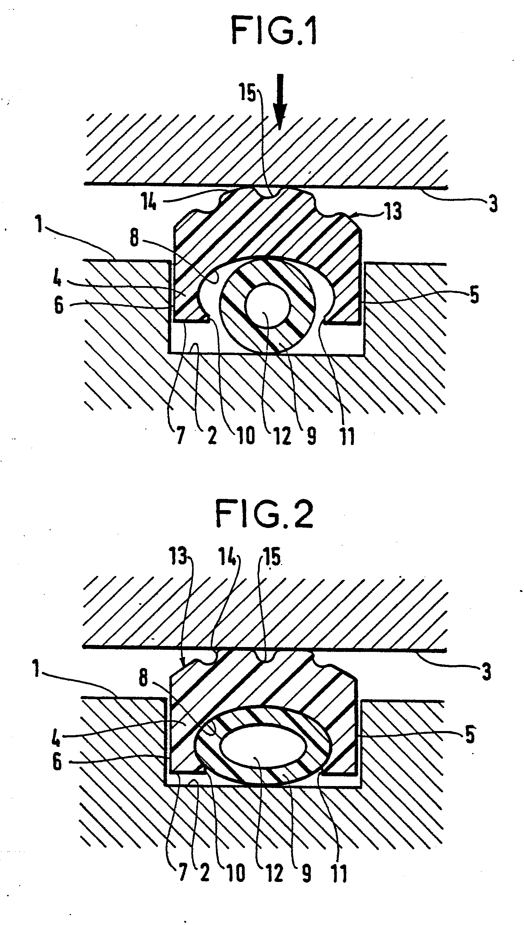

Dans la figure 1 la surface métallique plane 1 comporte une gorge 2 de section droite rectangulaire à flancs verticaux.

L'étanchéité doit être obtenue avec la surface métallique plane en regard 3, dont l'écartement par rapport à la surface 1 est variable. Dans la gorge est disposée l'enveloppe en élastomère 4 à flancs verticaux 5, 6 parallèles à ceux de la gorge, et à fond 7 plan. Ce fond présente une cavité longitudinale médiane 8, de forme elliptique tronquée, dans laquelle est logé le jonc cylindrique 9 en élastomère plus souple que celui de l'enveloppe. Il reste donc un certain espace entre la cavité et le jonc. Les bords 10, 11 de l'enveloppe le long du jonc sont légèrement chanfreinés. Le jonc est percé d'un orifice longitudinal 12, qui accroît son élasticité. Il est collé à l'enveloppe le long de sa génératrice supérieure.

La surface supérieure 13 de l'enveloppe présente un profil à bourrelets 14 alternant avec des creux 15, qui assure une meilleure étanchéité qu'un profil lisse.

Lorsque les deux surfaces rigides se rapprochent au serrage, l'enveloppe 4 s'enfonce dans la gorge 2 et le jonc 9 est progressivement comprimé.

La figure 2 correspond au serrage maximum des deux surfaces rigides. En se déformant, le jonc 9 a épousé la forme elliptique de la cavité sans créer des réactions latérales parasites susceptibles d'altérer la mobilité de l'enveloppe 4 dans la gorge 2. Lorsqu'en fonctionnement l'écartement varie, l'enveloppe coulisse verticalement dans la gorge, la déformation du jonc s'adapte en conséquence et l'étanchéité reste maintenue.

Le joint décrit ci-dessus peut être rectangulaire, et se composer alors de deux éléments perpendiculaires au plan de la figure et de deux éléments parallèles à celui-ci, avec des extrémités coupées à 90° ou à 45°. Il peut également être torique.

En remplaçant le jonc par un autre jonc percé d'un orifice de diamètre différent ou même plein, on peut obtenir un joint d'élasticité différente.

Bien que la forme de réalisation de l'invention qui vient d'être décrite en référence à la figure du dessin paraisse la plus avantageuse, on comprendra que certaines modifications peuvent lui être apportées sans sortir du cadre général de l'invention. En particulier, les flancs latéraux de la gorge et de l'enveloppe peuvent ne pas être rigoureusement verticaux, l'enveloppe présentant alors une section droite légèrement trapézoïdale à grande base vers le haut. La section de la cavité de l'enveloppe peut être rectangulaire ou trapézoïdale orienté dans un sens ou dans l'autre. Le jonc peut être plein, la souplesse du joint étant alors moindre. Des joncs de raideur différente peuvent être montés dans le même joint pour une meilleure adaptation de celui-ci à des différences d'écartement des deux surfaces rigides entre lesquelles on assure l'étanchéité, par exemple lorsqu'elles sont en position oblique l'une par rapport à l'autre.

L'invention s'applique non seulement aux joints à disposer entre deux surfaces mobiles l'une par rapport à l'autre en écartement, en translation ou en rotation, mais aussi aux joints entre des surfaces fixes, notamment entre celles de tubes emmanchés l'un dans l'autre.

REVENDICATIONS

1/ Joint en élastomère destiné à être disposé dans une gorge de section droite rectangulaire de l'une de deux surfaces rigides (1, 3) entre lesquelles on veut assurer l'étanchéité, caractérisé en ce qu'il comprend :

a/ une enveloppe (4) de faces latérales et inférieure sensiblement parallèles à celles de la gorge, de surface supérieure (13) destinée à être appliquée contre l'autre surface rigide, et comportant dans sa partie inférieure une cavité longitudinale (8),

b/ un jonc (9) disposé dans la cavité de l'enveloppe et venant en saillie sur la surface inférieure de celle-ci.

2/ Joint selon la revendication 1, caractérisé en ce que le jonc (9) est creux et de section cylindrique.

3/ Joint selon les revendications 1 ou 2, caractérisé en ce que la section de la cavité (8) de l'enveloppe (4) est une ellipse tronquée pour permettre la déformation du jonc par écrasement.

4/ Joint selon les revendications 1 ou 2, caractérisé en ce que le jonc (9) est collé au voisinage de sa génératrice supérieure sur la surface de la cavité (8) de l'enveloppe (4).

5/ Joint selon l'une des revendications 1 à 3, caractérisé en ce que l'élastomère du jonc (9) est plus souple que celui de l'enveloppe (4).

6/ Joint selon l'une des revendications 1 à 4 pour une gorge de contour rectangulaire, caractérisé en ce que son enveloppe (4) est monobloc, et en ce que son jonc se compose de quatre éléments droits à extrémités coupées à 90° ou 45°.

## FIG.1

## FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | GB-A-1 073 471 (B. DIXON) <br> * Page 1, lignes 34-56, 75-80; page 2, lignes 17-28; figures 3,10 * | 1-5 | E 06 B 7/23 <br> F 16 J 15/32 <br> F 16 J 15/02 |
| | --- | | |
| X | DE-B-1 301 659 (A.G. SAURER) <br> * Colonne 1, ligne 24 - colonne 2, ligne 42; figures * | 1 | |
| | --- | | |
| A | FR-A- 855 671 (GUIGNET) <br> * Page 2, lignes 2-40; figures 1,2 * | 3 | |
| | --- | | |
| A | GB-A-1 207 142 (SEALMASTER) <br> * Page 1, lignes 17-36; figures 1-4 * | 1,2 | |
| | --- | | **DOMAINES TECHNIQUES RECHERCHES (Int. Cl. 3)** |
| A | FR-A-1 328 706 (PNEUMODYNAMICS) <br> * Résumé , point 1; figures 1,2 * | 1,5 | |
| | ----- | | F 16 J <br> E 06 B |

Le présent rapport de recherche a été établi pour toutes les revendications

| Lieu de la recherche <br> LA HAYE | Date d'achèvement de la recherche <br> 26-07-1983 | Examinateur <br> LEGER M.G.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82